# EUROPEAN PATENT SPECIFICATION

(11) **EP 3 353 448 B1**
(45) Date of publication and mention of the grant of the patent: **12.08.2020**
(21) Application number: 15770860.3
(22) Date of filing: 23.09.2015
(51) Int. Cl.: F16H 48/38, F16H 55/17

(54) **CONNECTING ASSEMBLY AND METHOD FOR PRODUCING A CONNECTING ASSEMBLY**
ANSCHLUSSANORDNUNG UND VERFAHREN ZUR HERSTELLUNG EINER ANSCHLUSSANORDNUNG
ENSEMBLE DE CONNEXION ET PROCÉDÉ POUR LA PRODUCTION D'UN ENSEMBLE DE CONNEXION

(43) Date of publication of application: 01.08.2018
(73) Proprietor: GKN Driveline Köping AB, 731 29 Köping (SE)
(72) Inventor: EEK, Magnus, S-731 96 Köping (SE)
(74) Representative: Neumann Müller Oberwalleney & Partner Patentanwälte
(86) International application number: PCT/EP2015/071923
(87) International publication number: WO 2017/050375

(56) References cited:
- EP-A1- 2 538 119
- WO-A1-2007/085847
- GB-A- 1 367 739
- US-A1- 2012 000 314

## Description

The invention relates to a connecting assembly, in particular for transmitting rotary movement, and to a method of producing such a connecting assembly.

Connecting assemblies can be used for example in the driveline of a motor vehicle. More particularly, they can be part of a mechanical device for transmitting rotary movement in the driveline between an input element and an output element. Such mechanical devices can be for example, drive shafts, gearings, transmissions, couplings or clutches, without being limited thereto.

From document DE 10 2009 045 424 A1 a differential gearing is known comprising a differential cage and a ring gear connected thereto. The differential cage comprises a cylindrical outer seat portion and a flange portion extending outwardly therefrom. The ring gear has a cylindrical inner seat portion and an annular web that extends in axial direction. The ring gear and the differential cage are connected to each other with an axial weld that extends in circumferential direction between the flange portion of the differential cage and the annular web of the ring gear.

From WO 2011 064 206 A1 a connecting assembly is known that is part of a differential gearing for the driveline of a motor vehicle. The connecting assembly comprises a first housing part with a first flange portion and a second housing part with a second flange portion, and a driving gear having a receiving portion for receiving the first and second flange portions. Only the second flange portion is welded to the driving gear, whereas the first flange portion remains non-welded with regard to the connection with the driving gear. The weld is configured as an axial weld between an annular lip of the second housing part and an annular lip of the driving gear

From EP 2 538 119 A1 a connecting assembly for transmitting torque in a driveline is known, with the following features: a first drive element having a first connecting portion and a first tapered face; a second drive element having second connecting portion and a second tapered face; wherein the first connecting portion and the second connecting portion are connected to each other by a fixed connection; wherein the first tapered face and the second tapered face are axially supported against each other thereby forming a support connection, and wherein the first drive element and the second drive element are radially centered relative to each other by the first tapered face and the second tapered face.

It is an object of the present invention to propose a connecting assembly, more particularly for being used in the driveline of a motor vehicle, that allows to keep deformation of the connected parts low and that has a reduced mass. Furthermore, it is an object to propose a suitable method of producing such a connecting assembly-

The objective is achieved by the features of claim 1.

The term tapered in the context of the present invention is meant to include that the tapered faces can be at least partially conical and/or at least partially curved. However, the tapered faces of the first and second drive element are formed such that, in a longitudinal sectional view, an acute angle is enclosed between a tangent to a contact region between the first and second tapered faces and the longitudinal axis. Said acute angle can axially open in direction away from or towards the fixed connection.

The fixed connection between the first drive element and the second drive element can include any kind of mechanical connection, such as a bolted and/or threaded connection, and/or any kind of bonding connection, such as a welded, soldered or glued connection.

An advantage is that the tapered faces of the support region are used for radially centering the first and second drive elements relative to each other. Furthermore, deformation of the first and second drive elements under load can be kept low. The tapered faces, in particular an inverted taper, makes the structure of the second drive element contribute on the strength of the first drive element. A lower axial and radial deflection under load is achieved. Furthermore, the overall strength of the connecting assembly is improved because of a better support of the first drive element relative to the second drive element. As a consequence, the cross section of the first drive element can be downsized to reduce mass or to enable the use of a different material, such as powder metal.

Another advantage is that production and assembly expenditure for producing the connecting assembly can be kept low. Only one single connection must be effected, i.e. the fixed connection, for firmly connecting the two drive elements with each other, whereby also a form-fitting support connection is generated by the tapered faces. Thus, connection of the first and second drive element can be overall carried out quickly and cost-effectively. After the fixed connection is established, the support connection cannot be loosened any more, respectively, only by disconnecting the fixed connection again.

According to an embodiment, the fixed connection can be at least partially axially offset from the support connection. Due to the support connection and the fixed connection being axially offset from each other, forces and bending moments introduced into the first drive element, for example by a gear toothing or other torque transmitting structure, can be well supported and introduced into the second drive element. In an embodiment wherein the fixed connection is a welded connection, a root of the weld region and a root of the support region can be arranged with an axial offset from each other. For example, an axial distance between the support connection root and the weld root can amount to at least 25 % of the axial length of the first drive element.

A first half angle is enclosed between the first tapered face and the axis of rotation of the connecting assembly. Said half angle can also be referred to as tangent angle. More specifically, said half angle is smaller than 90°, i.e. the tapered full angle is smaller than 180°. For example, the half angle can be greater than 40° and/or smaller than 70°. The second tapered face preferably has the same angle, i.e. the second half angle enclosed between the second tapered face and the axis of rotation is also smaller than 90°. The first tapered face and/or the second tapered face can be circumferentially closed, i.e. annular faces. However, it is understood that the first and/or the second tapered faces can be parts of circumferentially distributed segments of the respective first and/or second drive element. The first tapered face is axially supported against the second tapered face preferably directly, i.e. the first and second tapered faces contact each other. As an alternative, the first and second tapered faces can also be axially supported against each other indirectly, i.e. via an intermediate component arranged therebetween.

The support connection can be configured such that the tapered angle opens in an axial direction away from the fixed connection. As an alternative, the support connection can also be configured such that the tapered angle opens in an axial direction towards the fixed connection. However, in both cases a radial undercut is formed between the support portion of the first drive element and the support portion of the second drive element so that a form-locking connection is achieved.

According to an embodiment, the first drive element can comprise a sleeve portion and the second drive element can comprise a flange portion that is received in the sleeve portion of the first drive element. The first connecting region can be formed by a welding extending in circumferential direction between the sleeve portion and the flange portion. A welded connection can have the advantage that the support connection is axially and radially pretensioned by shrinkage forces during cooling of the welded connection. An axial welding can have the advantage that the use of filler-wire may be reduced or even eliminated. An axial weld is particularly objected to axial and tangential shear stress. However, there is no tension in the root of the weld that is located perpendicular to the weld slot so that the overall endurance of the weld is enhanced. Furthermore, an axial welding has a positive influence on the stress distribution between the first and second drive elements. However, it is understood that the welding can also be configured as radial welding or fillet welding between the first and second drive elements.

The first drive element comprises a first side face and the second drive element comprises a second side face, wherein the first and second side faces may laterally delimit the welding region, i.e. can be arranged adjacent to the welding region. More particularly, the first and second side faces may be arranged at least substantially in one common side face plane, i.e. the first side face can be flush with the second side face.

The first drive element can comprise a ring portion through which the second drive element extends in an axial direction. According to one embodiment, an inner face of the ring portion and a respective outer face of the second drive element can be cylindrical faces. In this case, a slight press fit may be formed between the inner face of the ring portion and the outer face of the second drive element. A slight press fit may include values of 5 µm to 45 µm, for example. As an alternative, a clearance fit may also be formed between the cylindrical inner face of the ring portion and the cylindrical outer face of the second drive element. Keeping the radial clearance in the cone region at a minimum contributes to make the production of the assembly robust. Due to the cone design it is even possible that a small clearance fit closes to zero under operation, since the external forces acting on the first drive element make the ring portion to be moved radially inwardly so that the radial clearance is reduced under load. It is also possible, however, that a transition fit is provided between the inner face of the ring portion and the respective outer face of the second drive element. A transition fit in the context of this disclosure is meant to include a zero press fit, a low clearance fit as well as a low press fit. The transition fit may also be referred to as medium fit. A transition fit has the advantage that deformation of the contacting drive elements are kept low, which otherwise occur when using a tight press fit, however thereby still having sufficient radial support to keep an out-of-balance or run-out low. According to another embodiment, however, the inner face of the ring portion and the respective outer face of the second drive element can also deviate from a cylindrical form and can also be conical, for example.

The fixed connection may be radially offset from the support connection, which includes an embodiment wherein a medium diameter of the fixed connection is greater than a medium diameter of the support connection, and an alternative embodiment wherein a medium diameter of the fixed connection is smaller than a medium diameter of the support connection.

According to an embodiment, the first drive element can comprise a radial recess between the inner face of the sleeve portion and the first tapered face. The radial recess provides a tool run-out for manufacturing an inner face of the sleeve portion and the first connecting portion, respectively. Furthermore, stress peaks that may occur in the first drive element during or after welding or during operation of the connecting assembly can be kept low as an advantage.

The first and second drive element can be generally any kind of torque transmitting component in the driveline of a motor vehicle. For example, a drive element can be formed as a geared component, such as a ring gear for introducing torque into a gearing or coupling. A drive element can also be configured as a housing component, such as a gearing cage or coupling cage.

According to an exemplary embodiment, the first drive element can be configured as a toothed gear, such as a ring gear or crown gear and having a gear toothing. The second drive element can be configured as a rotatable housing that may be rotatingly supported around the axis of rotation in a stationary component. For a compact design of the connecting assembly, a portion of the ring gear toothing may be arranged so as to axially overlap a central housing plane of the housing, with the central housing plane being arranged perpendicular to the axis of rotation, preferably axially between a first and second bearing portion of the rotatable housing.

The toothed gear may have a conical toothing, wherein an opening angle of the conical toothing opens in axial direction towards the first and second conical faces of the assembly. By this design, axial forces resulting from torque transmission between a pinion gear and the toothed gear are axially supported by the tapered faces, i.e. by the support region that can also be referred to as tapered connection.

The toothed gear serves for introducing torque into the connecting assembly. Instead of the toothed gear, it is also possible to use a pulley or a chain disc for introducing torque. As mentioned above, the connecting assembly may be part of a gearing, such as a differential gearing that splits a torque introduced by the toothing of the first drive element and transmits same to two output parts. A further application for the connecting assembly can be an angular drive assembly that transmits torque from a first drive shaft to a second drive shaft arranged at an angle thereto. Another embodiment may include that the connecting assembly is part of a coupling which serves to connect, on demand, a secondary driving axle in the driveline of a motor vehicle driven by a plurality of axles.

The above-mentioned objective is further achieved by providing a method of producing a connecting assembly for transmitting torque, the method comprising the following steps: producing a first drive element having a longitudinal axis, the first driving element comprising a first connecting portion, a receiving portion and a first tapered face; producing a second drive element comprising a second connecting portion and a second tapered face; inserting the second drive element into the first drive element up to a fully inserted position in which the first tapered face and the second tapered face are axially supported against each other and interlock each other with an undercut, thereby coaxially aligning the first drive element and the second drive element relative to each other; and producing a fixed connection between the first connecting portion to the second connecting portion, wherein by producing the fixed connection between the first and second connecting portions, a form-fitting supporting connection is established between the first tapered face of the first drive element and the second tapered face of the second drive element.

The method substantially has the same advantages as the disclosed connecting assembly so that reference can be made to the above description. It is thus understood that all product-related features can also be adapted to the method and, vice versa, all method-related features can also be adapted to the product. A particular advantage of the product design relating to the method is that only one single fixed connection is necessary to firmly connect the two drive elements to each other, thereby generating two connecting regions. That is, by effecting the fixed connection, a support connection is formed by the tapered faces that interlock each other with an undercut. As mentioned above, the interlocking effect of the tapered faces contributes to only little deformation of the first and second drive element and the overall strength of the connecting assembly is improved. As mentioned above, an angle formed by the first tapered face and the second tapered face, respectively, can open in a direction away from the fixed connection. As an alternative, the support connection can also be configured such that an angle formed by the first tapered face and the second tapered face, respectively, can open in a direction axially towards the fixed connection.

The first drive element can comprise a first side face adjacent to the first connecting portion and the second drive element can comprise a second side face adjacent to the second connecting portion, wherein, in the fully inserted condition, the first side face and the second side face are at least approximately flush with each other.

According to an embodiment, the first drive element and the second drive element can be produced such that a transition fit is formed between at feast one inner face of the first drive element and a respective outer face of the second drive element. A transition fit contributes to an easy assembly, since the risk of shearing material during the step of axially pressing the drive elements towards each other is reduced, if not eliminated. The first drive element can be produced such that a radial recess is formed axially adjacent to the first contact portion, thereby forming a tool run-out for the manufacturing process.

The fixed connection can be effected by welding, with other connecting methods not being excluded. With reference to the axis of rotation of the first and second drive elements, the welding operation can take place in an axial direction between an inner cylindrical face of the receiving portion of the first drive element and an outer cylindrical face of the second drive element. More particularly, welding can be effected by rotating the connecting assembly relative to the welding device and the welding beam. The term "axial direction" in this context is meant to include certain deviations caused by production. The process of welding the first drive element to the second drive element is preferably effected by a high-energy beam, more particularly by a laser beam or an electron beam. Laser beam welding offers the advantage of a high process speed, and due to rapid cooling of the joined zone, shrinkage forces are generated which, in turn, may effect an axial pretension of the cone connection region.

According to an embodiment, the tapered faces of the first drive element and the second drive element are orientated such that an axial force of the first tapered face towards the second tapered face leads to a radial force component loading the first tapered face radially inwards. Thus, the tapered support region contributes to a firm connection between the first and second drive element. The tapered faces can have any shape having a variable diameter along the length thereof, such as a conical, arced, concave or convex, or mixtures thereof. Furthermore, the shape of the first tapered face can be different from the shape of the second tapered face. For example, one of the tapered faces can be conical and the other one of the tapered faces can be convex. However, in any case, a tangent angle enclosed between the longitudinal axis and a tangent to the tapered contact faces axially opens in direction away from the fixed connection.

The first and second drive elements can be made from the same or different material. For example, one of the drive elements can be produced from a case-hardening steel. Case-hardening steel is characterised by a high degree of toughness and a high degree of hardness on the surface and thus, overall, comprises a high degree of resistance against wear. Another one of the drive elements can be produced from a cast material.

Preferred embodiments will be explained below with reference to the drawings. Herein,
- Figure 1A: shows an inventive connecting assembly according to a first embodiment in a side view;
- Figure 1B: is a longitudinal section of the connecting assembly shown in Figure 1A according to section 1b-1b of Figure 1A;
- Figure 1C: shows a part of the connecting assembly of Figure 1B in greater detail;
- Figure 2A: shows a drive assembly with an inventive connecting assembly in a similar embodiment in an axial view;
- Figure 2B: is a longitudinal section of the drive assembly according to section 2b-2b of Figure 2A;
- Figure 3A: shows a drive assembly with an inventive connecting assembly according to another embodiment in an axial view;
- Figure 3B: is a longitudinal section of the drive assembly according to section 3b-3b of Figure 3A;
- Figure 4: shows an inventive connecting assembly according to another embodiment in a half-longitudinal section;
- Figure 5A: shows an inventive connecting assembly according to another embodiment in a half-longitudinal section;
- Figure 5B: the connecting assembly according to Figure 5A as an enlarged detail; and
- Figure 6: shows an inventive connecting assembly according to another embodiment in a half-longitudinal section.

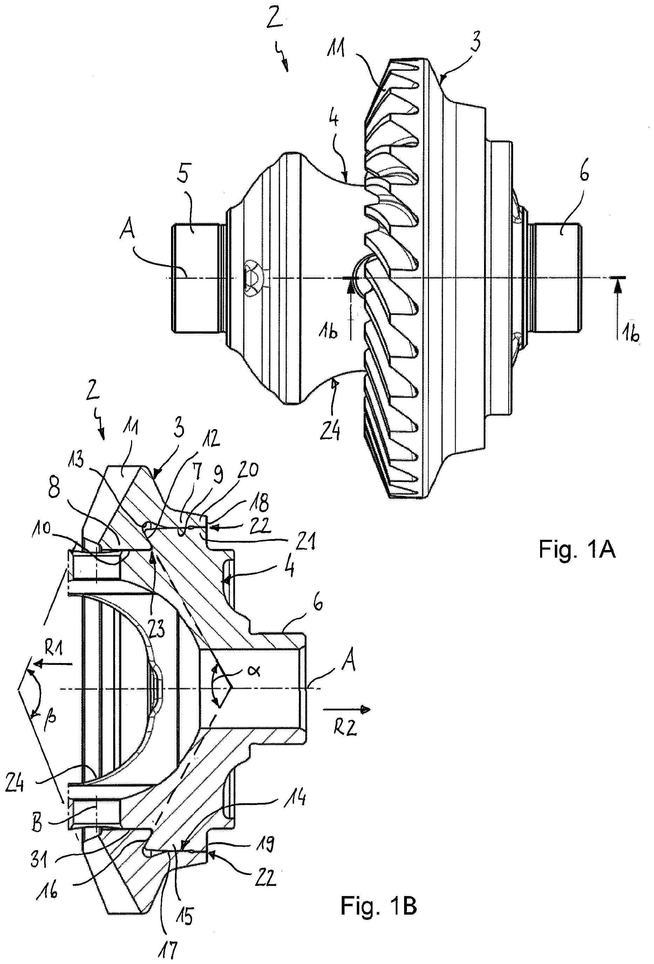

Figures 1A to 1C, which will be described jointly below, show an inventive connecting assembly 2 in a first embodiment. The connecting assembly 2 comprises a first drive element 3 and a second drive element 4 that are firmly connected to each other so that torque can be transmitted between the first and second drive elements 3, 4.

The first drive element 3 is configured in the form of a ring gear. The ring gear has a ring gear toothing 11 that can be made to meshingly engage a corresponding pinion gear so that the ring gear 3 can be rotatingly driven around an axis of rotation A. The second drive element 4 is configured in the form of a rotatable housing. The housing 4 has a first bearing portion 5 and a second bearing portion 6 that can be rotatingly supported around the axis of rotation relative to a stationary component (not shown). The ring gear 3 is machined to a finished state prior to assembly and welding to the housing 4.

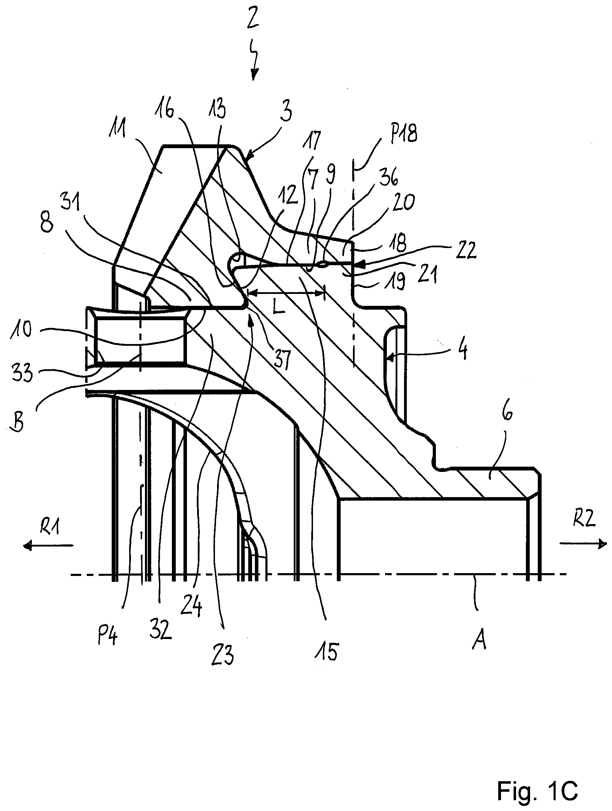

Figures 1B and 1C show the connecting assembly 2 between the first drive element 3 and the second drive element 4 in detail. The first drive element 3 comprises a sleeve portion 7 and a ring portion 8 that extends radially inwardly from the sleeve portion, such that an inner face 9 of the sleeve portion 7 has a larger diameter than an inner face 10 of the ring portion 8. The sleeve portion 7 surrounds an opening 14 for receiving a respective flange portion 15 of the second drive element 4. Thus, the sleeve portion 7 can also be referred to as receiving portion into which the second drive element 4 is axially inserted.

The first drive element 3 further comprises a first tapered face 12 that forms an axial end of the ring portion 8 towards the opening 14 enclosed by the sleeve portion 7. The tapered face 12 is configured so as to form a radial undercut in the first drive element 3, i.e. a tapered angle α defined by the conical face 12 opens axially in direction R1 towards the ring portion 8. The first drive element has a radial recess 13 that is formed between the cylindrical inner face 9 of the sleeve portion 7 and the tapered face 12. The angle α amounts to about 120°, i.e. the respective half angle α/2 enclosed between the first tapered face 12 and the axis of rotation A amounts to about 60°. It is understood that other angles may be used, such as angles α greater than 80 ° and/or smaller than 140°. It can be seen that the second tapered face16 has the same angle α.

The outer contour of the second drive element 4 substantially corresponds to the inner contour of the first drive element 3. More specifically, the second drive element 4 comprises a radially outwardly projecting and circumferentially extending flange portion 15 that is formed so as to fit into the receiving portion 7 of the first drive element 3. The flange portion 15 comprises the second tapered face 16 that forms an axial end of the flange portion towards the ring portion 8 of the first drive element 3, an outer cylindrical face 17 and a side face 19 forming the other axial end of the flange portion 15. The second tapered face 16 is configured so as to form a radial undercut in the second drive element 4, i.e. the tapered angle α defined by the second tapered face 16 opens axially towards the ring portion 8, too. The first tapered 12 and the second tapered face 16 contact each other, wherein the first drive element 3 is axially supported against the second drive element 4 in a direction R2 towards the flange portion 15, so that a support region 23 is formed. In the present embodiment, the first tapered face 12 and the second tapered face 16 are formed as conical faces, so that the tapered angles can also be referred to as cone angles.

In a fully inserted condition, i.e. when the two tapered faces 12, 16 contact each other, the outer side face 19 of the flange portion 15 is positioned approximately in the same plane P18 as the side face 18 of the first drive element 3, which laterally delimits the receiving portion 7. Furthermore, a first connecting portion 20 of the first drive element 3 is arranged radially vis a vis a second connecting portion 21 of the second drive element 4. The first and second connecting portions 20, 21 are welded to each other, wherein a weld connection 22 is formed. It can be seen that the weld connection 22 is axially distanced from the support connection 23 defined by the first and second conical faces 12, 16. More specifically, a root 36 of the weld region 22 and a root 37 of the support connection 23 are arranged with an axial distance L from each other.

The tolerances of the cylindrical inner face 9 of the sleeve portion 7 of the first drive element 3 and the cylindrical outer face 17 of the flange portion 15 are configured such that a transition fit is formed between said cylindrical inner and outer faces 9, 17. In other words, a low clearance fit, for example up to 45 µm, or a low press fit, for example up to 45 µm, may be provided between the cylindrical faces 9, 17 before being welded to each other. The same is also applicable for the seat region formed between the ring portion 8 and the housing 4. There, a transition fit can be formed between the inner cylindrical face 10 of the ring portion 8 and the outer cylindrical face 31 of the housing portion 32. Thus, deformation is kept low when the first drive element 3 is axially pushed or moved onto the second drive element 4. After axially inserting the second drive element 4 into the first drive element 3, i.e. up to a condition in which the first and second conical faces 12, 16 contact each other, welding is effected in the region between the first and second connecting portion 20, 21 so that the welded connection 22 is formed.

The weld is produced by an axial welding extending in circumferential direction around the longitudinal axis A between an axial end region of the sleeve portion 7 and an axial end region of the flange portion 15. Said end regions that are configured to be weldingly connected to each other are also be referred to as first and second connecting portions 20, 21. The welding connection 22 is axially delimited by the first side face 18 of the first drive element 3 and the second side face 19 of the second drive element 4. It can be seen that the first and second side faces 18, 19 are arranged substantially in one common side face plane P18. The step of welding can be effected by rotating the connecting assembly 2 relative to a welding device. Welding the first and second drive elements 3, 4 can be effected by a high-energy beam, such as a laser beam. A filler material for the weld may be used, if necessary.

The first and second drive element 3, 4 are preferably made from a metal material. For example, the first drive element 3 can be made from a case-hardening steel, and the second drive element 4 can be produced from a cast material, for example.

It can be seen that the first drive element 3 has a conical toothing 11, wherein an opening angle β of the conical toothing 11 opens in axial direction R2 towards the first and second conical faces 12, 16 of the assembly. By this design, an axial force resulting from a pinion meshing with the ring gear 3 is introduced from the ring gear 3 into the housing 4 by the conical faces 12, 16. The ring portion 8 and the toothing 11 of the drive gear 3 partially axially overlap a central housing plane P4 of the housing 4. The central housing plane P4 is arranged perpendicular to the axis of rotation A.

In the embodiment according to Figures 1A to 1C, the housing 4 is formed as a differential carrier having two bores 33 for accommodating a bearing journal (not shown). The bearing journal serves to rotatingly support two differential gears around a journal axis B. The differential gears are made to engage a first and a second sideshaft gear (not shown) which are arranged coaxially relative to the axis of rotation A in the housing 4. The two sideshaft gears serve to drive a respective sideshaft for transmitting torque to the vehicle wheels. It can be seen in Figure 1A that the housing 4 has two radial openings 24 through which the differential gears and sideshaft gears can be inserted and mounted into the housing 4. The housing 4 can be made from one piece, i.e. integrally, for example by casting technique.

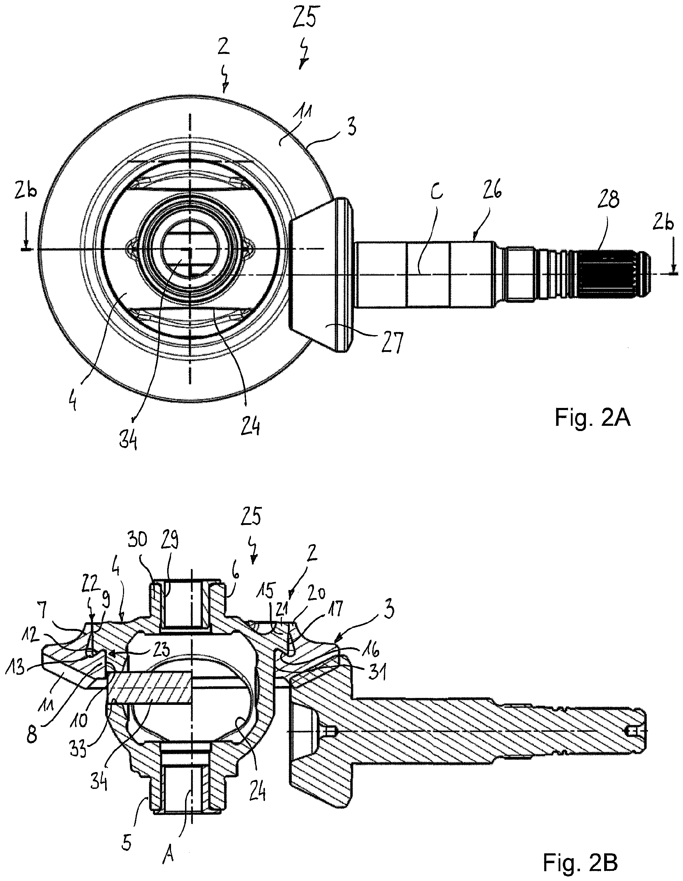

Figures 2A and 2B which will be described jointly below show a drive assembly 25 with a connecting assembly 2 similar to the connecting assembly according to Figures 1A to 1C. The connecting assembly 2 according to Figures 2A and 2B substantially corresponds to the connecting assembly 2 according to Figures 1A to 1C, so that reference is made to the above description. Identical and similar components have the same reference numbers as those used in Figures 1A to 1C.

The drive assembly 25 is configured to transmit torque in a driveline of a motor vehicle. It comprises a drive shaft 26 with a pinion 27 connected thereto, wherein the drive shaft can be rotationally supported in a stationary housing so as to be rotatable around an axis of rotation C. At an end facing away from the pinion 27, the drive shaft has splines 28 for introducing torque from a further driveline component. The pinion 27 meshingly engages the toothing 11 of the ring gear 3 so as to rotationally drive the ring gear 3 and the housing 4 around the axis of rotation A.

The housing 4 of the drive assembly 2 forms a differential cage for accommodating a differential gear set (not shown). A torque introduced from the ring gear 3 into the differential cage 4 is split up by the differential gear set and transmitted to two respective side shafts to drive the vehicle wheels. In Figure 2B, one can see two bearing bushes 29 introduced into the sleeve projections 30 of the differential cage 4. Furthermore, the journal 34 for rotatingly supporting the differential gears can be seen, that is held the bores 33 of the differential cage 4. The drive assembly 25 according to Figures 2A to 2B can also be referred to as differential drive assembly.

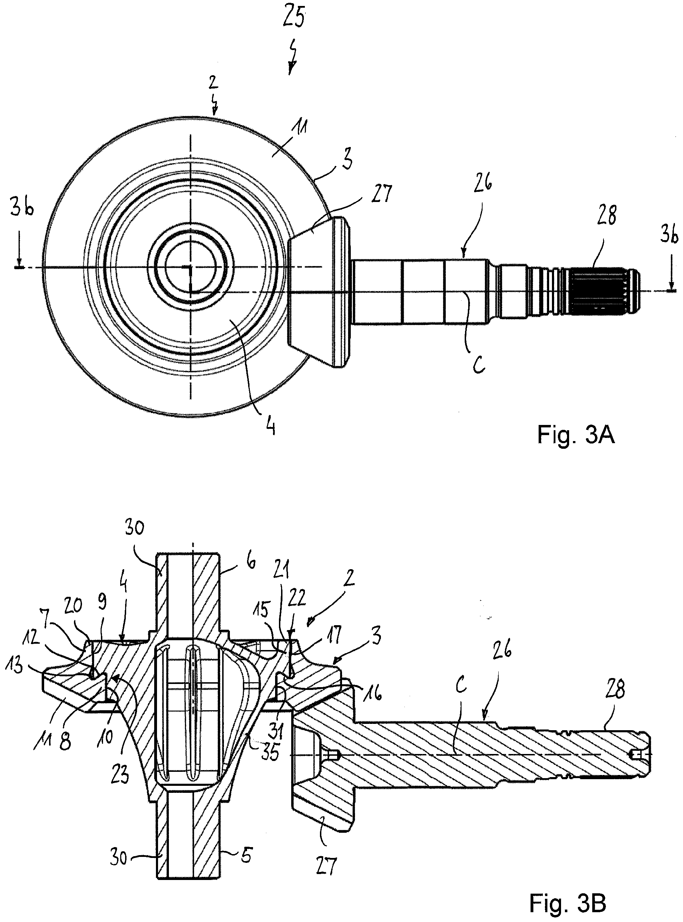

Figures 3A and 3B which will be described jointly below show a drive assembly 25 with a connecting assembly 2 according to a further embodiment. The connecting assembly 2 according to Figures 3A and 3B widely corresponds to the connecting assembly 2 according to Figures 1A to 1C and Figures 2A to 2B, respectively, so that reference is made to the above description. Identical and similar components have the same reference numbers as those used in Figures 1A to 1C and 2A to 2B, respectively.

The drive assembly 25 according to Figures 3A and 3B is configured in the form of an angle drive assembly, with the housing 4 being formed as a hollow shaft. The pinion 27 of the drive shaft 26 engages the toothing 11 of the ring gear 3. A torque introduced into the drive shaft 26 is transmitted to the connecting assembly 2, or vice versa. As in the above embodiments, the ring gear 3 is connected to the housing 4 via the tapered support connection 23, i.e. cone connection 23, and the welded connection 22. The housing 4 is configured in the form of a hollow shaft comprising a housing portion 35 and two sleeve portions 30 axially projecting from the housing portion 35.

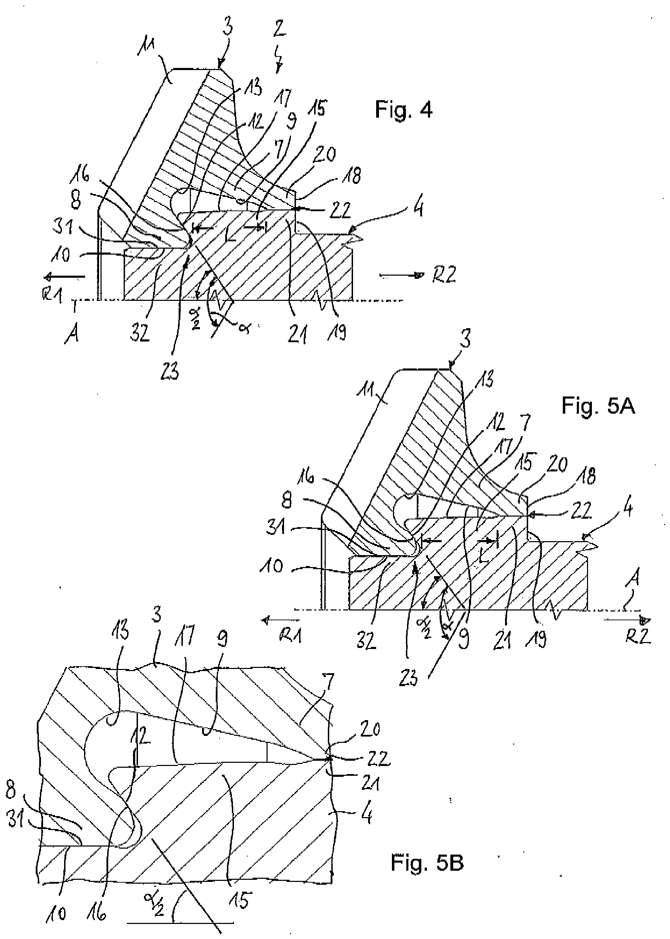

Figures 4 show a connecting assembly 25 in another embodiment. The connecting assembly 2 according to Figure 4 substantially corresponds to the connecting assembly 2 according to Figures 1A to 1C, so that reference is made to the above description. Identical and similar components have the same reference numbers as those used in Figures 1A to 1C.

A difference of the embodiment shown in Figure 4 is that the second drive element 4 is formed as a drive shaft, more particularly a solid drive shaft, wherein it is understood that also a hollow drive shaft may be used. The flange portion15 thus has a relatively small diameter. The first drive element 3 is formed as a ring gear which has an inner contour corresponding to the outer contour of the drive shaft 4, such that the ring gear 3 can be slid on the drive shaft.

In a slid on condition, the tapered face 12 of the ring gear 3 contacts the tapered face 16 of the drive shaft 4 and the outer side face 19 of the flange portion 15 is positioned approximately in the same plane as the side face 18 of the ring gear 3. The recess 13 is relatively big and extends from the first connecting portion 20 towards the tapered face 12 of the ring gear 3. The inner face 9 of the ring gear 3 opens towards the recess, i.e. is substantially conical. The outer face 17 of the flange portion 15 is slightly conical towards the support connection 23. An annular gap is formed between the inner face 9 of the ring gear 3 and the outer face 17 of the drive shaft 4. As in the above-described embodiments, the first and second connecting portions 20, 21 are welded to each other so that a welded connection 22 is formed. The first and second connecting portions 20, 21 have cylindrical faces towards each other. The weld connection 22 is axially distanced from the support connection 23 defined by the first and second conical faces 12, 16 by a length L. The opening angle β of the conical toothing 11 opens in axial direction R2 towards the support connection 23 of the assembly so that axial forces introduced into the ring gear 3 are axially supported by the support face 16 and do not negatively affect the welding connection 22.

Figures 5A and 5B that will be jointly described hereinafter show a connecting assembly 25 in another embodiment. The connecting assembly 2 according to Figures 5A and 5B substantially corresponds to the connecting assembly 2 according to Figure 4, so that reference is made to the above description. Identical and similar components have the same reference numbers as those used in Figures 4 and 1A to 1C, respectively.

A difference of the embodiment shown in Figures 5A and 5B is that the tapered face 12 of the ring gear 3 has a curved contour in a longitudinal section. The tapered face 16 of the drive shaft is conical, as shown in the other embodiments. Between the curved tapered face 12 and the conical tapered face 16 a contact is formed. A tangent T to the tapered faces 12, 16 in the contact region of contact defines a tapered angle α that opens in an axial direction away from the fixed connection 22. The tapered angle α, that can also be referred to as tangent angle, amounts to less than 180° and can be between 80° and 160°, for example. Accordingly, half the tapered angle (α/2) is smaller than 90°. In the present embodiment the annular contact face between the first and second tapered faces 12, 16 is relatively small. Otherwise, the present embodiment corresponds to the above-described embodiments so that reference is hereby made to the above description.

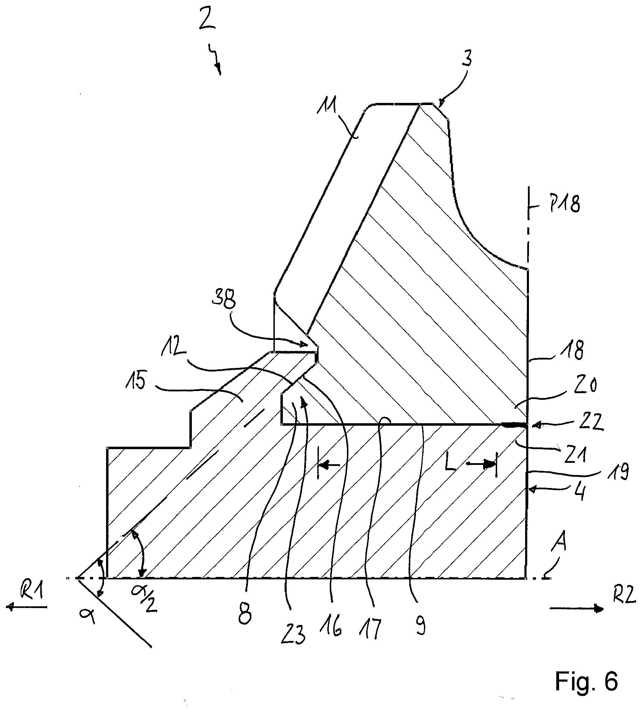

Figures 6 show a connecting assembly 25 in another embodiment. The connecting assembly 2 according to Figure 6 substantially corresponds to the connecting assembly 2 according to Figure 4, so that reference is made to the above description. Identical and similar components have the same reference numbers as those used in Figure 4.

A difference of the embodiment shown in Figure 4 is that the support connection 23 is configured such that the tapered angle α formed between the first tapered face 12 and the second tapered face 16 opens in an axial direction towards the fixed connection 22. The ring gear 3 has an axial recess 38 in a side face thereof, wherein said axial recess forms the support portion with the first tapered face 12 of the ring gear 3. Accordingly, the flange portion 15 of the drive shaft 4 comprises an axial extending support portion forming the second tapered face 16. The support portion of the drive shaft 4 axially extends into the annular recess 38 of the ring gear 3 so as to form the support connection 23, wherein the first tapered face 12 is in contact with the second tapered face 16. The welded fixed connection 22 is arranged on the axial opposite side of the ring gear 3, i.e. at an axial distance L from the support connection 23. The inner face 9 of the ring gear 3 and the outer face 17 of the drive shaft 4 are cylindrical faces, but not limited thereto. A transition fit, slight press fit or slight clearance fit can be formed between the inner and outer faces 9, 17.

An advantage of all of the above described embodiments is that the tapered faces 12, 16 of have an interlocking effect so that the first drive element 3 is restricted from being deformed radially outwardly. The connecting assemblies 2 thus feature a high overall strength so that, as a consequence, the cross section of the first drive element 3 can be downsized to reduce mass. Furthermore, due to the support connection 23 being axially offset from the fixed connection 22, in a half-longitudinal sectional view, a tripodlike structure is formed between the force introduction point of the first drive element 3, the support connection 23 and the fixed connection 22. Thus, forces and bending moments can be supported very well and deformation of the connecting assembly 2 is minimised.

### List of reference numbers

- 2: connecting assembly
- 3: first drive element
- 4: second drive element
- 5: first bearing portion
- 6: second bearing portion
- 7: sleeve portion
- 8: ring portion
- 9: cylindrical inner face
- 10: inner face
- 11: toothing
- 12: first tapered face
- 13: radial recess
- 14: opening
- 15: flange portion
- 16: second tapered face
- 17: outer face
- 18: side face
- 19: side face
- 20: connecting portion
- 21: connecting portion
- 22: fixed connection
- 23: support connection
- 24: opening
- 25: drive assembly
- 26: drive shaft
- 27: pinion
- 28: splines
- 29: bearing bush
- 30: sleeve projection
- 31: outer face
- 32: housing portion
- 33: bore
- 34: journal
- 35: housing portion
- 36: weld root
- 37: cone root
- 38: recess

- α: tapered angle
- β: opening angle
- A: axis
- B: axis
- C: axis
- L: distance
- P: plane
- R: direction

## Claims

1. A connecting assembly for transmitting torque in a driveline, comprising:
a first drive element (3) having a first connecting portion (20) and a first tapered face (12);
a second drive element (4) having second connecting portion (21) and a second tapered face (16);
wherein the first connecting portion (20) and the second connecting portion (21) are connected to each other by a fixed connection (22);
wherein the first tapered face (12) and the second tapered face (16) are axially supported against each other and interlock each other with an undercut thereby forming a form-fitting support connection (23), wherein the first drive element (3) and the second drive element (4) are radially centered relative to each other by the first tapered face (12) and the second tapered face (16).

2. A connecting assembly according to claim 1, **characterized in that** the fixed connection (22) is at least partially axially offset from the support connection (23).

3. A connecting assembly according to claim 1 or 2, **characterized in that** a half angle (α/2) is enclosed between the first tapered face (12) and an axis of rotation (A) of the connecting assembly, wherein the half angle (α/2) is smaller than 90°.

4. A connecting assembly according to any one of claims 1 to 3, **characterized in that** the first drive element (3) comprises a sleeve portion (7) and the second drive element (4) comprises a flange portion (15) that is received in the sleeve portion (7) of the first drive element (3),
wherein the fixed connection (22) is formed by a welding extending in circumferential direction between the sleeve portion (7) and the flange portion (15).

5. A connecting assembly according to any one of claims 1 to 4, **characterized in that**, in a region of the fixed connection (22), the first drive element (3) comprises a first side face (18) and the second drive element (4) comprises a second side face (19), wherein the first side face (18) and the second side face (19) are arranged in one side face plane (P18).

6. A connecting assembly according to any one of claims 1 to 5, **characterized in that** the first drive element (3) comprises a ring portion (8) through which the second drive element (4) extends axially,
wherein a press fit is formed between an inner face (10) of the ring portion (8) and an outer face (31) of the second drive element (4).

7. A connecting assembly according to any one of claims 4 to 6, **characterized in that** the first drive element (3) comprises a radial recess (13) between the inner face (9) of the sleeve portion (7) and the first tapered face (12).

8. A connecting assembly according to any one of claims 1 to 7, **characterized in that** the first drive element (3) is configured as a ring gear having a ring gear toothing (11),
wherein the ring gear toothing (11) is conical, wherein an opening angle (β) of the ring gear toothing (11) opens in axial direction (R2) towards the second tapered face (16) of the second drive element (4).

9. A connecting assembly according to any one of claims 3 to 8, **characterized in that** the second drive element (4) is configured as at least one of a housing and a drive shaft that is rotatingly supported around the axis of rotation (A).

10. A connecting assembly according to any one of claims 1 to 9, **characterized in that** a root (36) of the fixed connection (22) and a root (37) of the support connection (23) are arranged with an axial offset (L) from each other.

11. A connecting assembly according to any one of claims 1 to 10, **characterized in that** a full angle (α) of the support connection (23) opens in an axial direction (R1) away from the fixed connection (22).

12. A method of producing a connecting assembly for transmitting torque, the method comprising the following steps:
producing a first drive element (3) having a longitudinal axis (A), the first driving element (3) comprising a first connecting portion (20), a receiving portion (7) and a first tapered face (12);
producing a second drive element (4) comprising a second connecting portion (21) and a second tapered face (16);
inserting the second drive element (4) into the first drive element (3) up to a fully inserted position in which the first tapered face (12) and the second tapered face (16) are axially supported against each other and interlock each other with an undercut, thereby coaxially aligning the first drive element (3) and the second drive element (4) relative to each other;
producing a fixed connection (22) between the first connecting portion (20) and the second connecting portion (21), wherein, by producing the fixed connection (22), a form-fitting support connection (23) is established between the first tapered face (12) of the first drive element (3) and the second tapered face of the second drive element (4).

13. A method according to claim 12, **characterized in that** the first drive element (3) comprises a first side face (18) adjacent to the first connecting portion (20), and the second drive element (4) comprises a second side face (19) adjacent to the second connecting portion (21),
wherein, in the fully inserted condition, the first side face (18) and the second side face (19) are at least approximately flush with each other and the first connecting portion (20) axially overlaps the second connecting portion (21).

14. A method according to claim 12 to 13, **characterized in that** the first drive element (3) and the second drive element (4) are produced such that a press fit is formed between an inner face (9, 10) of the first drive element (3) and a respective outer face (17, 31) of the second drive element (4).

15. A method according to any one of claims 12 to 14, **characterized in that** the first drive element (3) is produced such that a radial recess (13) is formed between the inner face (9) of the sleeve portion (7) and the first tapered face (12).

16. A method according to any one of claims 12 to 15, **characterized in that** the fixed connection (22) between the first drive element (3) and the second drive element (4) is effected by welding, more particularly by a high-energy beam.

## Patentansprüche

1. Verbindungsanordnung zur Übertragung von Drehmoment in einem Antriebsstrang, umfassend:
ein erstes Antriebselement (3) mit einem ersten Verbindungsabschnitt (20) und einer ersten konischen Fläche (12);
ein zweites Antriebselement (4) mit einem zweiten Verbindungsabschnitt (21) und einer zweiten konischen Fläche (16);
wobei der erste Verbindungsabschnitt (20) und der zweite Verbindungsabschnitt (21) durch eine feste Verbindung (22) miteinander verbunden sind;
wobei die erste konische Fläche (12) und die zweite konische Fläche (16) axial gegeneinander abgestützt sind und mit einer Hinterschneidung ineinander greifen und dadurch eine formschlüssige Stützverbindung (23) bilden, wobei das erste Antriebselement (3) und das zweite Antriebselement (4) durch die erste konische Fläche (12) und die zweite konische Fläche (16) relativ zueinander radial zentriert sind.

2. Verbindungsanordnung nach Anspruch 1, **dadurch gekennzeichnet, dass** die feste Verbindung (22) zumindest teilweise axial gegenüber der Stützverbindung (23) versetzt ist.

3. Verbindungsanordnung nach Anspruch 1 oder 2, **dadurch gekennzeichnet, dass** ein Halbwinkel (a/2) zwischen der ersten konischen Fläche (12) und einer Drehachse (A) der Verbindungsanordnung eingeschlossen ist, wobei der Halbwinkel (a/2) kleiner als 90° ist.

4. Verbindungsanordnung nach einem der Ansprüche 1 bis 3, **dadurch gekennzeichnet, dass** das erste Antriebselement (3) einen Hülsenabschnitt (7) und das zweite Antriebselement (4) einen Flanschabschnitt (15) aufweist, der in dem Hülsenabschnitt (7) des ersten Antriebselements (3) aufgenommen ist, wobei die feste Verbindung (22) durch eine Schweißung gebildet ist, die sich in Umfangsrichtung zwischen dem Hülsenabschnitt (7) und dem Flanschabschnitt (15) erstreckt.

5. Verbindungsanordnung nach einem der Ansprüche 1 bis 4, **dadurch gekennzeichnet, dass** in einem Bereich der festen Verbindung (22) das erste Antriebselement (3) eine erste Seitenfläche (18) und das zweite Antriebselement (4) eine zweite Seitenfläche (19) aufweist, wobei die erste Seitenfläche (18) und die zweite Seitenfläche (19) in einer Seitenflächenebene (P18) angeordnet sind.

6. Verbindungsanordnung nach einem der Ansprüche 1 bis 5, **dadurch gekennzeichnet, dass** das erste Antriebselement (3) einen Ringabschnitt (8) aufweist, durch den sich das zweite Antriebselement (4) axial erstreckt,
wobei eine Presspassung zwischen einer Innenfläche (10) des Ringabschnitts (8) und einer Außenfläche (31) des zweiten Antriebselements (4) gebildet ist.

7. Verbindungsanordnung nach einem der Ansprüche 4 bis 6, **dadurch gekennzeichnet, dass** das erste Antriebselement (3) eine radiale Aussparung (13) zwischen der Innenfläche (9) des Hülsenabschnitts (7) und der ersten konischen Fläche (12) aufweist.

8. Verbindungsanordnung nach einem der Ansprüche 1 bis 7, **dadurch gekennzeichnet, dass** das erste Antriebselement (3) als Ringrad mit einer Ringradverzahnung (11) ausgebildet ist,
wobei die Ringradverzahnung (11) konisch ist, wobei sich ein Öffnungswinkel (ß) der Ringradverzahnung (11) in axialer Richtung (R2) zur zweiten konischen Fläche (16) des zweiten Antriebselements (4) hin öffnet.

9. Verbindungsanordnung nach einem der Ansprüche 3 bis 8, **dadurch gekennzeichnet, dass** das zweite Antriebselement (4) als mindestens eines von einem Gehäuse und einer Antriebswelle gestaltet ist, die drehbar um die Drehachse (A) gelagert ist.

10. Verbindungsanordnung nach einem der Ansprüche 1 bis 9, **dadurch gekennzeichnet, dass** ein Grund (36) der festen Verbindung (22) und ein Grund (37) der Stützverbindung (23) mit einem axialen Versatz (L) zueinander angeordnet sind.

11. Verbindungsanordnung nach einem der Ansprüche 1 bis 10, **dadurch gekennzeichnet, dass** sich ein voller Winkel (α) der Stützverbindung (23) in axialer Richtung (R1) von der festen Verbindung (22) weg öffnet.

12. Verfahren zur Herstellung einer Verbindungsanordnung zur Drehmomentübertragung, wobei das Verfahren die folgenden Schritte umfasst:
Herstellen eines ersten Antriebselements (3) mit einer Längsachse (A), wobei das erste Antriebselement (3) einen ersten Verbindungsabschnitt (20), einen Aufnahmeabschnitt (7) und eine erste konische Fläche (12) aufweist;
Herstellen eines zweiten Antriebselements (4) mit einem zweiten Verbindungsabschnitt (21) und einer zweiten konischen Fläche (16);
Einführen des zweiten Antriebselements (4) in das erste Antriebselement (3) bis zu einer vollständig eingeführten Position, in der die erste konische Fläche (12) und die zweite konische Fläche (16) axial gegeneinander abgestützt sind und mit einer Hinterschneidung ineinander greifen, wodurch das erste Antriebselement (3) und das zweite Antriebselement (4) koaxial zueinander ausgerichtet werden;
Herstellen einer festen Verbindung (22) zwischen dem ersten Verbindungsabschnitt (20) und dem zweiten Verbindungsabschnitt (21), wobei durch Herstellen der festen Verbindung (22) eine formschlüssige Stützverbindung (23) zwischen der ersten konischen Fläche (12) des ersten Antriebselements (3) und der zweiten konischen Fläche des zweiten Antriebselements (4) hergestellt wird.

13. Verfahren nach Anspruch 12, **dadurch gekennzeichnet, dass** das erste Antriebselement (3) eine erste Seitenfläche (18) angrenzend an den ersten Verbindungsabschnitt (20) aufweist, und das zweite Antriebselement (4) eine zweite Seitenfläche (19) angrenzend an den zweiten Verbindungsabschnitt (21) aufweist,
wobei in dem vollständig eingesetzten Zustand die erste Seitenfläche (18) und die zweite Seitenfläche (19) zumindest annähernd bündig miteinander sind und der erste Verbindungsabschnitt (20) den zweiten Verbindungsabschnitt (21) axial überlappt.

14. Verfahren nach einem der Ansprüche 12 bis 13, **dadurch gekennzeichnet, dass** das erste Antriebselement (3) und das zweite Antriebselement (4) so hergestellt werden, dass ein Presssitz zwischen einer Innenfläche (9, 10) des ersten Antriebselements (3) und einer jeweiligen Außenfläche (17, 31) des zweiten Antriebselements (4) gebildet wird.

15. Verfahren nach einem der Ansprüche 12 bis 14, **dadurch gekennzeichnet, dass** das erste Antriebselement (3) so hergestellt wird, dass zwischen der Innenfläche (9) des Hülsenabschnitts (7) und der ersten konischen Fläche (12) eine radiale Aussparung (13) gebildet wird.

16. Verfahren nach einem der Ansprüche 12 bis 15, **dadurch gekennzeichnet, dass** die feste Verbindung (22) zwischen dem ersten Antriebselement (3) und dem zweiten Antriebselement (4) durch Schweißen, insbesondere durch einen Hochenergiestrahl, hergestellt wird.

## Revendications

1. Ensemble de raccordement pour transmettre un couple dans une transmission, comprenant :
un premier élément d'entraînement (3) ayant une première partie de raccordement (20) et une première face conique (12) ;
un deuxième élément d'entraînement (4) ayant une deuxième partie de raccordement (21) et une deuxième face conique (16) ;
dans lequel la première partie de raccordement (20) et la deuxième partie de raccordement (21) sont raccordées l'une à l'autre par un raccord fixe (22) ;
dans lequel la première face conique (12) et la deuxième face conique (16) sont soutenus axialement l'une contre l'autre et se verrouillent mutuellement l'une l'autre avec une contre dépouille en formant ainsi un raccord de soutien d'ajustement par complémentarité de forme (23), dans lequel le premier élément d'entraînement (3) et le deuxième élément d'entraînement (4) sont centrés radialement l'un par rapport à l'autre par la première face conique (12) et la deuxième face conique (16).

2. Ensemble de raccordement selon la revendication 1, **caractérisé en ce que** le raccord fixe (22) est au moins partiellement décalé axialement du raccord de soutien (23).

3. Ensemble de raccordement selon la revendication 1 ou 2, **caractérisé en ce qu'**un demi angle (a/2) est renfermé entre la première face conique (12) et un axe de rotation (A) de l'ensemble de raccordement, dans lequel le demi-angle (a/2) est plus petit que 90°.

4. Ensemble de raccordement selon une quelconque des revendications 1 à 3, **caractérisé en ce que** le premier élément d'entraînement (3) comprend une partie de manchon (7) et le deuxième élément d'entraînement (4) comprend une partie de bride (15) qui est reçue dans la partie de manchon (7) du premier élément d'entraînement (3),
dans lequel le raccord fixe (22) est formé par une soudure s'étendant dans la direction circonférentielle entre la partie de manchon (7) et la partie de bride (15) .

5. Ensemble de raccordement selon une quelconque des revendications 1 à 4, **caractérisé en ce que**, dans une région du raccord fixe (22), le premier élément d'entraînement (3) comprend une première face latérale (18) et le deuxième élément d'entraînement (4) comprend une deuxième face latérale (19), dans lequel la première face latérale (18) et la deuxième face latérale (19) sont disposées dans un plan de face latérale (P18) .

6. Ensemble de raccordement selon une quelconque des revendications 1 à 5, **caractérisé en ce que** le premier élément d'entraînement (3) comprend une partie annelée (8) à travers laquelle le deuxième élément d'entraînement (4) s'étend axialement,
dans lequel un ajustement par pressage est formé entre une face intérieure (10) de la partie annelée (8) et une face extérieure (31) du deuxième élément d'entraînement (4) .

7. Ensemble de raccordement selon une quelconque des revendications 4 à 6, **caractérisé en ce que** le premier élément d'entraînement (3) comprend un évidement radial (13) entre la face intérieure (9) de la partie de manchon (7) et la première face conique (12).

8. Ensemble de raccordement selon une quelconque des revendications 1 à 7, **caractérisé en ce que** le premier élément d'entraînement (3) est configuré comme une couronne dentée ayant une denture de couronne (11),
dans lequel la denture de couronne (11) est conique, dans lequel un angle d'ouverture (β) de la denture de couronne (11) s'ouvre dans une direction axiale (R2) dans la direction de la deuxième face conique (16) du deuxième élément d'entraînement (4).

9. Ensemble de raccordement selon une quelconque des revendications 3 à 8, **caractérisé en ce que** le deuxième élément d'entraînement (4) est configuré comme au moins un d'un boîtier et d'un arbre d'entraînement qui est soutenu rotativement autour de l'axe de rotation (A).

10. Ensemble de raccordement selon une quelconque des revendications 1 à 9, **caractérisé en ce qu'**une racine (36) du raccord fixe (22) et une racine (37) du raccord de soutien (23) sont disposés avec un décalage axial (L) l'une par rapport à l'autre.

11. Ensemble de raccordement selon une quelconque des revendications 1 à 10, **caractérisé en ce qu'**un angle plein (α) du raccord de soutien (23) s'ouvre dans une direction axiale (R1) se détournant le raccord fixe (22) .

12. Procédé de production d'un ensemble de raccordements pour transmettre un couple, le procédé comprenant les étapes suivantes consistant à :
produire un premier élément d'entraînement (3) ayant un axe longitudinal (A), le premier élément d'entraînement (3) comprenant une première partie de raccordement (20), une partie de réception (7) et une première face conique (12) ;
produire un deuxième élément d'entraînement (4) comprenant une deuxième partie de raccordement (21) et une deuxième face conique (16) ;
insérer le deuxième élément d'entraînement (4) dans le premier élément d'entraînement (3) jusqu'à une position totalement insérée dans laquelle la première face conique (12) et la deuxième face conique (16) sont soutenues axialement l'une contre l'autre et se verrouillent mutuellement l'une l'autre avec une contre dépouille, en alignant ainsi coaxialement le premier élément d'entraînement (3) et le deuxième élément d'entraînement (4) l'un par rapport à l'autre ;
produire un raccord fixe (22) entre la première partie de raccordement (20) et la deuxième partie de raccordement (21), dans lequel, en produisant le raccord fixe (22), un raccord de soutien d'ajustement par complémentarité de forme (23) est établi entre la première face conique (12) du premier élément d'entraînement (3) et la deuxième face conique du deuxième élément d'entraînement (4).

13. Procédé selon la revendication 12, **caractérisé en ce que** le premier élément d'entraînement (3) comprend une première face latérale (18) adjacente à la première partie de raccordement (20), et le deuxième élément d'entraînement (4) comprend une deuxième face latérale (19) adjacente à la deuxième partie de raccordement (21),
dans lequel, dans la condition totalement insérée, la première face latérale (18) et la deuxième face latérale (19) sont au moins approximativement au ras l'une de l'autre et la première partie de raccordement (20) se superposent axialement à la deuxième partie de raccordement (21).

14. Procédé selon une des revendications 12 à 13, **caractérisé en ce que** le premier élément d'entraînement (3) et le deuxième élément d'entraînement (4) sont produits de sorte qu'un ajustement par pressage soit formé entre une face intérieure (9, 10) du premier élément d'entraînement (3) et une face extérieure (17, 31) respective du deuxième élément d'entraînement (4).

15. Procédé selon une quelconque des revendications 12 à 14, **caractérisé en ce que** le premier élément d'entraînement (3) est produit de sorte qu'un évidement radial (13) soit formé entre la face intérieure (9) de la portion de manchon (7) et la première face conique (12).

16. Procédé selon une quelconque des revendications 12 à 15, **caractérisé en ce que** le raccord fixe (22) entre le premier élément d'entraînement (3) et le deuxième élément d'entraînement (4) est effectué par soudure, plus particulièrement par un faisceau à haute énergie.
